# EUROPEAN PATENT SPECIFICATION

(11) **EP 2 565 087 B1**
(45) Date of publication and mention of the grant of the patent: **29.07.2015**
(21) Application number: 11798009.4
(22) Date of filing: 14.06.2011
(51) Int. Cl.: B60R 21/213, B60R 21/2165, B60R 21/2338, B60R 21/237

(54) **AIRBAG DEVICE**
AIRBAGVORRICHTUNG
DISPOSITIF DE COUSSIN DE SÉCURITÉ GONFLABLE

(30) Priority: 23.06.2010 JP 2010142809
(43) Date of publication of application: 06.03.2013
(73) Proprietor: Honda Motor Co., Ltd., Minato-ku Tokyo (JP); Takata Corporation, Tokyo 107-8508 (JP)
(72) Inventor: OKAMOTO, Yutaka, Wako-shi Saitama 351-0193 (JP); KIKUCHI, Yuji, Wako-shi Saitama 351-0193 (JP); NAKAMURA, Atsushi, Tokyo 107-8508 (JP); KOBAYASHI, Yoshihiro, Tokyo 107-8508 (JP)
(74) Representative: Weickmann & Weickmann
(86) International application number: PCT/JP2011/063553
(87) International publication number: WO 2011/162123

(56) References cited:
- EP-A1- 2 147 834
- JP-A- 2001 010 440
- JP-A- 2002 283 939
- JP-A- 2005 096 686
- JP-A- 2009 096 278

## Description

### Technical Field

The present invention relates to airbag devices which have an airbag stored folded between a front pillar and a front windshield glass, and in which the airbag is covered with a garnish.

### Background Art

In airbag devices of this type, an airbag (bag body) is stored folded between a front pillar and a front windshield glass, and the thus-stored airbag is covered with a garnish. The garnish is, for example, of a type including a core and resin formed integrally on the outer surface of the core, or of a type formed only of resin. The garnish is mounted on the front pillar so that the airbag is covered with the garnish.

Once an external obstacle collides against a vehicle provided with such an airbag device, the airbag deploys. As the airbag deploys like this, deploying force of the airbag acts on the garnish and detaches the garnish from the front pillar to thereby open a space between the front pillar and the front windshield glass, so that the airbag deploys through the opened space along the front pillar.

Even when the vehicle makes a secondary collision with the external obstacle, for example, the airbag having deployed along the front pillar can appropriately receive an impact from the external obstacle. Thus, an impact acting on the external obstacle can be lessened by the airbag (see, for example, patent literature 1).

EP 2 147 834 discloses an airbag device along a pillar of a car body having a folded body. EP 2 147 834 discloses an airbag device according to the preamble part of claim 1.

However, in the airbag device disclosed in patent literature 1, a middle portion, in a vehicle body front-rear direction, of the airbag is not connected to the vehicle body. Thus, as the airbag deploys, the middle portion of the airbag may undesirably spread toward the front windshield glass (i.e., spread laterally away from the front pillar). As a consequence, it would become difficult to cause the deploying force of the airbag to efficiently act upwardly, and thus, it would become difficult for the garnish to appropriately open upwardly by the deploying force of the airbag.

As a measure for appropriately opening the garnish upwardly, it may be conceivable to increase rigidity of a side wall, facing the front windshield glass, of the garnish so that the side wall can prevent the airbag from undesirably protruding laterally. However, this measure is not preferable in terms of fuel cost etc. because increasing the rigidity of the side wall facing the front windshield glass as above would result in an increased weight of the garnish.

Further, in the case where the garnish is of the type including a core, the airbag device disclosed in patent literature 1, the garnish might be undesirably detached from the front pillar as the garnish is opened by the deploying force of the airbag. Further, in the case where the garnish is of the type formed only of resin, the garnish might be undesirably broken to be detached from the front pillar as the garnish is opened by the deploying force of the airbag.

### Prior Art Literature

Patent literature 1: Japanese Patent Application Laid-open Publication No. 2009-234431

### Summary of Invention

### Technical Problem

It is therefore an object to provide an airbag device which can not only appropriately open the garnish upwardly by deploying force of the airbag but also reliably keep the garnish retained by the front pillar during deployment of the airbag.

### Solution to Problem

The above-mentioned object is achieved by a device according to claim 1.

According to an invention of claim 1 of the instant application, there is provided an airbag device which comprises: an airbag stored folded between a front pillar and a front windshield glass; an inflator for supplying gas to the airbag to deploy the airbag; a garnish covering the airbag and openable by deploying force of the airbag; a front connection section connecting a front side part, adjacent to the front pillar, of a front end portion of the airbag to the front pillar; a rear connection section connecting a rear side part, adjacent to the front pillar, of a rear end portion of the airbag to the front pillar; and a middle connection section connecting a middle lower part of the airbag to the front pillar, and which is characterized in that the front connection section and the rear connection section prevent the airbag from buckling toward the front windshield glass when an obstacle has collided against the airbag following deployment of the airbag, and in that the middle connection section prevents the airbag from protruding toward the front windshield glass at an initial stage of deployment of the airbag.

The airbag is folded in half along a straight line interconnecting middle points, in a vehicle width direction, of the front end portion and the rear end portion of the airbag in such a manner that the middle lower part is located on an outer side of the airbag, and the airbag is also folded in an accordion configuration in such a manner that the middle lower part of the airbag folded in half is located on a lower side of the airbag.

### Advantageous Effects of Invention

According to the invention of claim 1, the airbag is connected, at a lower part of its middle portion (i.e., middle lower part), to the front pillar. Thus, at the initial stage of deployment, the airbag is prevented from protruding toward the front windshield glass. Thus, deploying force of the airbag can be caused to efficiently act upwardly, so that the garnish can be appropriately opened upwardly by the deploying force of the airbag. By the airbag being prevented from protruding toward the front windshield glass, the invention allows the airbag to deploy along an upper portion of the front pillar while preventing lateral buckling of the airbag during the deployment.

According to the invention of claim 1, with the airbag folded in half along the straight line interconnecting the middle points, in the vehicle width direction, of the front end portion and the rear end portion of the airbag, the middle lower part of the is located on the outer side of the airbag. Further, the airbag is also folded in an accordion shape or configuration with the middle lower part located on the lower side of the airbag.

Namely, the middle lower part of the airbag is connected to the front pillar via the middle connection section. Thus, the middle connection section can prevent the middle lower part from moving laterally toward the front windshield glass at the initial stage of deployment of the airbag. In this way, it is possible to reliably prevent the airbag from protruding laterally toward the front windshield glass at the initial stage of deployment of the airbag and thus prevent lateral buckling of the airbag.

### Brief Description of Drawings

Fig. 1 is a perspective view showing a front vehicle body structure provided with an airbag device according to the present invention,
Fig. 2 is an exploded perspective view showing the airbag device of Fig. 1;
Fig. 3 is a sectional view taken along line 3 - 3 of Fig. 1;
Fig. 4 is an exploded perspective view of a garnish shown of Fig. 2;
Fig. 5 is a perspective view of a core of Fig. 4;
Fig. 6 is a perspective view showing an engaging section and a stud member of the airbag device;
Fig. 7 is a perspective view showing a rear end portion of the airbag of Fig. 2 mounted on a rear mounting bracket via a rear connection section;
Fig. 8 is a perspective view showing the airbag of Fig. 2 before being folded;
Fig. 9 is a sectional view taken along line 9 - 9 of Fig. 8;
Fig. 10 is a perspective view showing the airbag of Fig. 8 folded in half; Fig. 11 is a sectional view taken along line 11-11 of Fig. 10;
Fig. 12 is a perspective view showing the airbag of Fig. 10 folded in an accordion configuration;
Fig. 13 is a sectional view taken along line 13 -13 of Fig. 12;
Fig. 14 is a perspective view showing the airbag of Fig. 12 in a deployed state;
Fig. 15 is a sectional view taken along line 15 -15 of Fig. 1;
Fig. 16 is a view showing a sequence of operations for folding the airbag; Fig. 17 is a view showing a sequence of operations for engaging the engaging section with the stud member;
Fig. 18 is a view showing the engaging section engaged with the stud member, of which (b) is a sectional view taken along line 18b - 18b of (a) of Fig. 18;
Fig. 19 is a view showing an example manner in which the airbag is deployed;
Fig. 20 is a sectional view showing the airbag in a deployed state; and
Fig. 21 is a perspective view showing the airbag in the deployed state.

### Description of Embodiments

Next, a description will be given about preferred embodiments with reference to the accompanying drawings.

### Embodiments

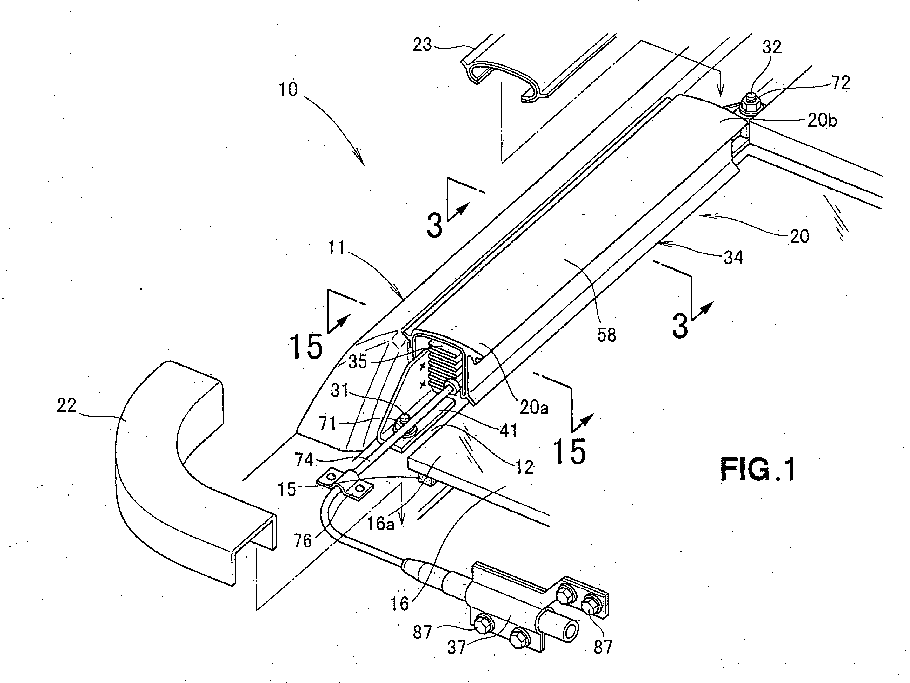

As shown in Fig. 1, a front vehicle body structure 10 includes: a right front pillar 11 provided on a right side portion of the vehicle body; a front windshield glass 16 placed at its right end portion 16a on a flange section 12 of the right front pillar 11 (vehicle body) via a seal 15; an airbag device 20 provided between the front windshield glass 16 and the right front pillar 11; a cowl cover 22 provided on a front end portion 20a of the airbag device 20; and a side roof rail cover 23 provided on a back or rear end portion 20b of the airbag device 20.

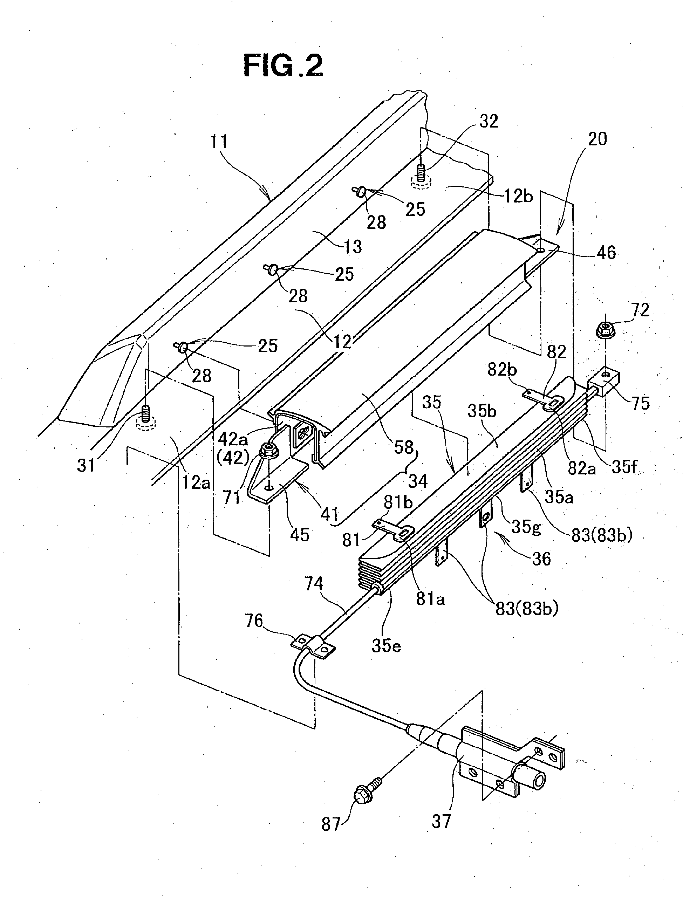

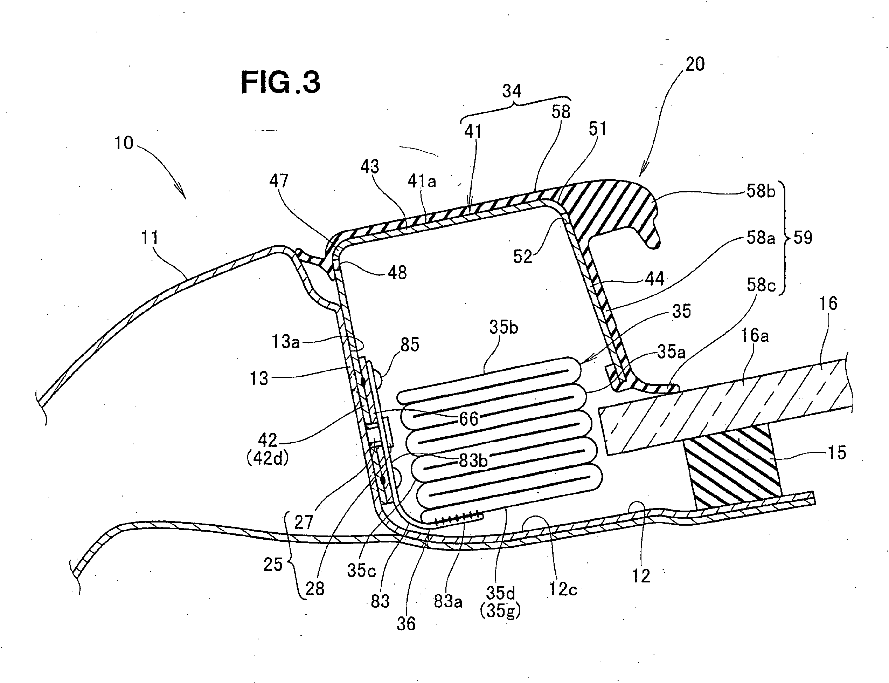

As shown in Figs. 2 and 3, the right front pillar 11 includes an inner side wall 13 located closer to the center of the vehicle body and extending upwardly, and a plurality of stud members 25 provided on the inner side wall 13 at predetermined intervals in a vehicle body front-rear direction.

Each of the stud members 25 includes a support shaft 27 having a proximal end portion fixedly joined by welding to the inner surface 13a of the inner side wall 13, and an increased-diameter portion 28 formed at a distal end portion of the support shaft 27. With the proximal end portion of the support shaft 27 fixedly joined by welding to the surface 13a, the support shaft 27 is fixed to and projects from the surface 13a toward an airbag 35. The increased-diameter portion 28 is formed on the distal end portion of the support shaft 27 projecting from the surface 13a.

On a front end portion of the flange section 12, a front stud bolt 31 is provided on and projects upwardly from a part 12a between the inner wall 13 of the right front pillar 11 and the front windshield glass 16 (such a part 12a will hereinafter be referred to as "front part"). Further, on a back or rear end portion of the flange section 12, a rear stud bolt 32 is provided on and projects upwardly from a part 12b between the inner wall 13 of the right front pillar 11 and the front windshield glass 16 (such a part 12b will hereinafter be referred to as "rear part").

The airbag device 20 includes: a garnish 34 provided on the right front pillar 11; an airbag (bag body) 35 accommodated or stored within the garnish 34; a connection means 36 connecting the airbag 35 to the right front pillar 11; and an inflator 37 communicating with the airbag 35.

The garnish 34 extends along the right front pillar 11 in an upward slope toward the rear of the vehicle body. The garnish 34 includes a metal core 41 mounted on the right front pillar 11, and a decorative resin section 58 provided on the surface 41a of the core 41.

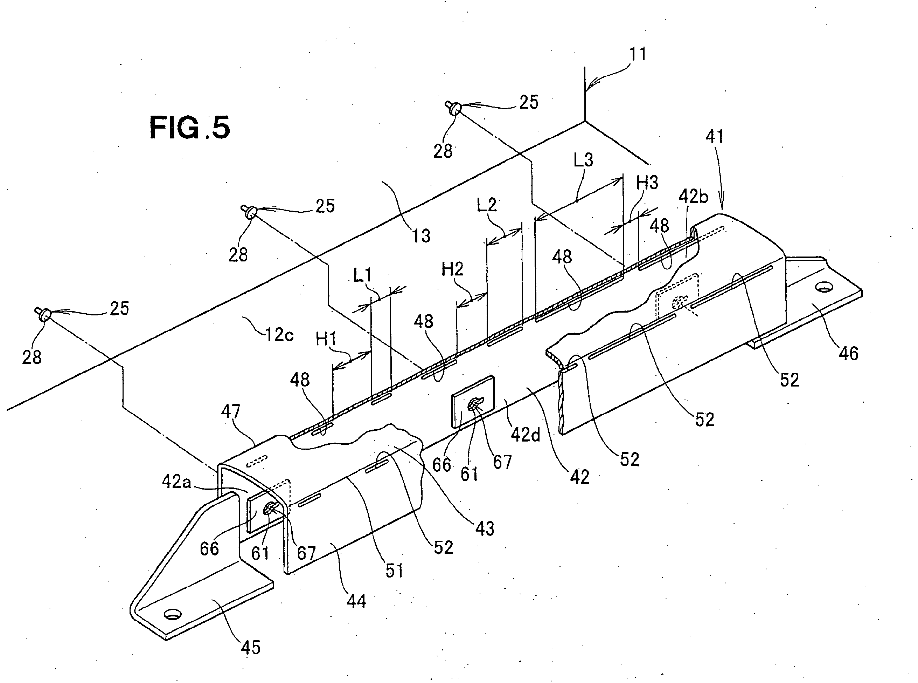

The core 41 includes: a pillar-side wall 42 extending along the right front pillar 11; a lid section 43 projecting laterally from an upper end portion of the pillar-side wall 42; a window-glass-side wall 44 projecting downwardly from an inner side edge portion of the lid section 43; a front mounting bracket 45 provided on a front end portion 42a of the pillar-side wall 42; and a rear mounting bracket 46 provided on a rear end portion 42b (see Fig. 5) of the pillar-side wall 42.

The core 41 is formed in a substantially U shape with the pillar-side wall 42, the lid section 43 and the window-glass-side wall 44. As the lid section 43 is opened upwardly by pressing force produced by deploying movement of the airbag 35 (i.e., deploying force of the airbag 35), the window-glass-side wall 44 prevents the airbag 35 from shifting or escaping toward the front windshield glass 16. In this way, the airbag 35 can appropriately deploy along the right front pillar 11. Here, the "deploying force" of the airbag 35 also means pressing force acting on the core 41 as the airbag 35 deploys.

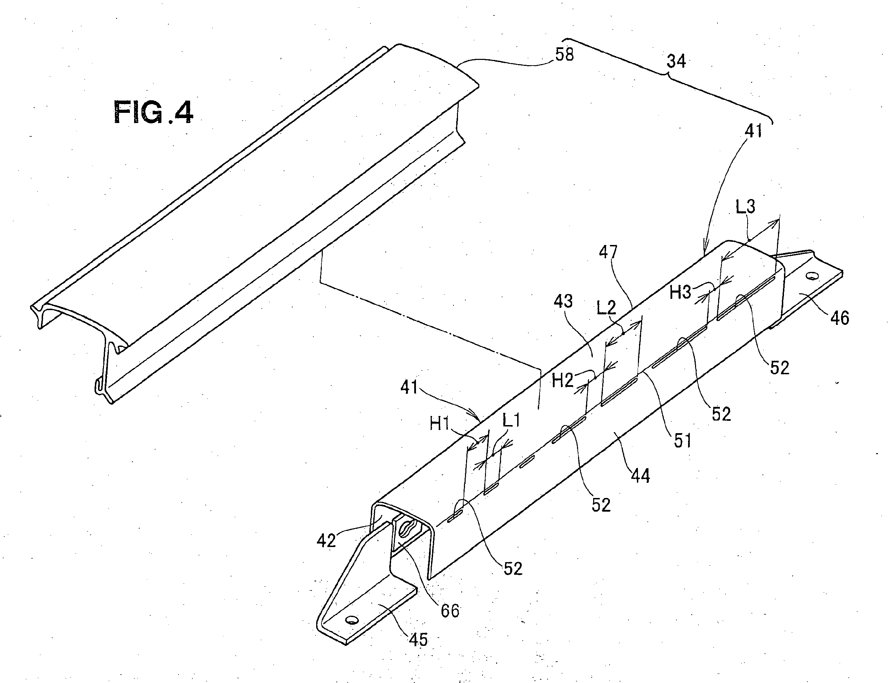

As shown in Figs. 4 and 5, the core 41 further includes: an outer corner portion (corner portion) 47 which the pillar-side wall 42 and the lid section 43 are connected to; a plurality of outer slits 48 formed in the outer corner portion 47; an inner corner portion 51 which the lid section 43 and the window-glass-side wall 44 are connected to; and a plurality of inner slits 52 formed in the inner corner portion 51.

The lid section 43 is supported for pivotal movement about the outer corner portion 47. Namely, the outer corner portion 47 is a part functioning as a hinge pivotably supporting the lid section 43. By the formation of the plurality of outer slits 48 in the outer corner portion 47, the outer corner portion 47 is adjustable in strength. By the formation of the plurality of outer slits 48 in the outer corner portion 47, the outer corner portion 47 is adjustable in strength in correspondence with force that pivots the lid section (i.e., deploying force of the airbag 35).

The lid section 43 is connected to the pillar side wall 42 of the core 41 via the outer corner portion 47 in such a manner that it is pivotable about the outer corner portion 47. Thus, as the airbag 35 deploys, the lid section 43 can be smoothly opened upwardly about the outer corner portion 47 by the deploying force of the airbag 35 being caused to act on the lid section 43. Thus, the airbag 35 can appropriately deploy along the right front pillar 11 without the deployment of the airbag 35 being obstructed by the lid section 43.

Further, the strength of the outer corner portion 47 is adjustable by the formation of the plurality of outer slits 48 in the outer corner portion 47. Thus, as the deploying force of the airbag 35 acts on the lid section 43, the lid section 43 can be smoothly opened upwardly about the outer corner portion 47.

When gas is charged from the inflator (Fig. 1) into the airbag 35, the gas is first supplied to a portion of the airbag 35 close to the inflator 37 and then supplied to a portion of the airbag 35 remote from the inflator 37. Thus, deploying force is first produced in the portion close to the inflator 37 and then produced in the portion remote from the inflator 37.

Distances H1, H2 and H3 between the outer slits 48 are set to be greater in the portion close to the inflator 37 than in the portion remote from the inflator 37, i.e. such that relationship of distance H1> distance H2 > distance H3 is established.

Further, lengths L1, L2 and L3 of the outer slits 48 are set to be smaller in the portion close to the inflator 37 than in the portion remote from the inflator 37, i.e. such that relationship of length L1< length L2 < length L3 is established.

Thus, it is possible to prevent a region of the outer corner portion 47 close to the inflator 37 from fracturing when deploying force has been produced in the portion of the airbag 35 close to the inflator 37. Thus, as the deploying force of the airbag 35 acts on the lid section 43, the lid section 43 can be smoothly opened upwardly about the outer corner portion 47 by the deploying force of the airbag 35.

The window-glass-side wall 44 is supported for pivotal movement about the inner corner portion 51 (see also Fig. 3). Namely, the inner corner portion 51 functions as a hinge pivotably supporting the window-glass-side wall 44. By the formation of the plurality of inner slits 52 in the inner corner portion 51, the inner corner portion 51 is adjustable in strength. Namely, by the formation of the plurality of inner slits 52 in the inner corner portion 51, the inner corner portion 51 is adjustable in strength in correspondence with force that pivots the window-glass-side wall 44 (i.e., deploying force of the airbag 35).

The window-glass-side wall 44 is connected to the lid section 43 of the core 41 via the inner corner portion 41 in such a manner that it is pivotable about the inner corner portion 51. Thus, as the airbag 35 deploys, the window-glass-side wall 44 can be smoothly opened about the inner corner portion 51 by the deploying force of the airbag 35 being caused to act on the window-glass-side wall 44. Thus, the airbag 35 can be appropriately deployed along the right front pillar 11 without the deployment of the airbag 35 being obstructed by the window-glass-side wall 44.

Further, the strength of the inner corner portion 51 is adjustable by the formation of the plurality of inner slits 52 in the inner corner portion 51. Thus, as the deploying force of the airbag 35 acts on the window-glass-side wall 44, the window-glass-side wall 44 can be smoothly opened upwardly about the inner corner portion 51.

As with the outer slits 48, distances H1, H2 and H3 between the inner slits 52 are set to be greater in the portion close to the inflator 37 (Fig. 1) than in the portion remote from the inflator 37. Further, as with the outer slits 48, lengths L1, L2 and L3 of the inner slits 52 are set to be smaller in the portion close to the inflator 37 (Fig. 1) than in the portion remote from the inflator 37.

Thus, it is possible to prevent a region of the inner corner portion 51 close to the inflator 37 from fracturing when deploying force has been produced in the portion of the airbag 35 close to the inflator 37. Thus, as the deploying force of the airbag 35 acts on the lid section 43, the entire window-glass-side wall 44 can be smoothly opened upwardly about the inner corner portion 51 by the deploying force of the airbag 35.

The pillar-side wall 42 extends in the vehicle body front-rear direction along the right front pillar 11 and is formed for mounting to the right front pillar 11. The right front pillar 11 has a plurality of first engaging sections 61 for mounting to the plurality of stud members 25.

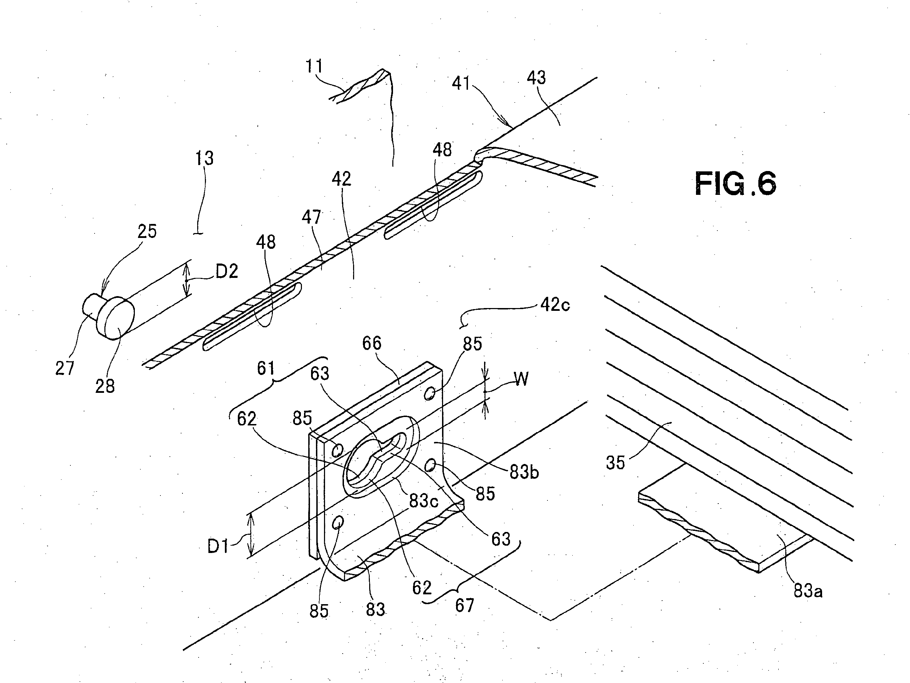

As shown in Fig. 6, each of the first engaging sections 61 includes a fitting hole 62 fittable over the increased-diameter portion 28, and an engaging groove 63 communicating with the fitting hole 62. The engaging groove 63 is a groove not only communicating with the fitting hole 62 but also extending toward the rear of the vehicle body, and it has a groove width W smaller than a diameter D1 of the fitting hole 62 and is formed to be fittable over the support shaft 27. The width W of the engaging groove 63 is smaller than an outer diameter D2 of the increased-diameter portion 28.

A reinforcing plate 66 is provided on a part of the inner wall surface 42c of the pillar-side wall 42 where the first engaging sections 61 is formed. The reinforcing plate 66 has a substantially rectangular shape and has a second engaging section 67 formed centrally therein. The second engaging section 67 has the same shape as the first engaging section 61 and is superposed on the first engaging section 61. Namely, the second engaging section 67 has a fitting hole 62 and an engaging groove 63 similar in shape and position to the fitting hole 62 and the engaging groove 63 of the first engaging section 61.

The engaging grooves 63 of the first and second engaging sections 61 and 67 are fitted over the support shaft 27 of the stud member 25. The diameter D1 of the engaging hole is substantially equal to or greater by about 0.1 mm than the outer diameter D2 of the increased-diameter portion 28. Further, the groove width W of the engaging groove 63 is smaller than the outer diameter D2 of the increased-diameter portion 28. Thus, with the engaging groove 63 fitted over the support shaft 27, the increased-diameter portion 28 can prevent the engaging groove 63 from slipping out of engagement with the support shaft 27. In this way, the metal core 41 (pillar-side wall 42) can be mounted on the inner wall 13 of the right front pillar 11 via the support shafts 27 (namely, the stud members 25).

By the pillar-side wall 42 being mounted on the inner wall 13 of the right front pillar 11 by means of the stud members 25 in the aforementioned manner, the garnish 34 can be kept retained on the right front pillar 11 while the garnish 34 is opened by deploying force of the airbag 35.

As shown in Fig. 3, the lid section 43 of the core 41 projects from an upper end portion of the pillar-side wall 42inwardly toward the center in the vehicle width direction so that it is located over the airbag 35. With the lid section 43 located over the airbag 35 as above, an upper portion 35b of the airbag 35 is covered with the lid section 43.

Further, the window-glass-side wall 44 projects from the inner side edge portion of the lid section 43 toward the front windshield glass 16. Thus, the window-glass-side wall 44 can prevent the airbag 35 from inflating laterally toward the front windshield glass 16.

As shown in Fig. 2, the front mounting bracket 45 is fastened to the front stud bolt 31, projecting from the front part 12a of the flange section12, by means of a front nut 71. The rear mounting bracket 46 is fastened to the rear stud bolt 32, projecting from the rear part 12b, by means of a rear nut 72.

In the aforementioned manner, the metal core 41 (pillar-side wall 42) is mounted on the inner wall 13 of the right front pillar 11 by means of the stud members 25. Further, the front mounting bracket 45 of the core 41 is fastened to the front part 12a of the flange section 12 by means of the front stud bolt 31 and the front nut 71, while the rear mounting bracket 46 of the core 41 is fastened to the rear part 12b of the flange section 12 by means of the rear stud bolt 32 and the rear nut 72. In this way, the core 41 (i.e., the garnish 34) can be firmly secured to the right front pillar 11, and the garnish 34 can be even more reliably kept retained by the right front pillar 11 while the garnish 34 is opened by the deploying airbag 35.

As shown in Fig. 3, the decorative resin section 58 of the garnish 34 is formed of olefin elastomer (TPO) resin covering the surface 41a of the core 41. The decorative resin section 58 includes: a resin layer 58a covering the surface of the window glass-side wall 44; a water processing protrusion 58b protruding from an upper end portion of the resin layer 58a toward the center in the vehicle width direction; and a lip portion 58c protruding from a lower end portion of the resin layer 58a toward the center in the vehicle width direction.

The resin layer 58a, the water processing protrusion 58b and the lip potion 58c together constitute a water processing section 59 having a water processing capability. By the provision of such a water processing section 59 on the decorative resin section 58 formed of TPO resin, the instant embodiment can prevent water droplets on the surface of the front windshield glass 16 from entering the garnish 34, but also smoothly direct the water droplets on the surface of the front windshield glass 16 downwardly along the water processing section 59.

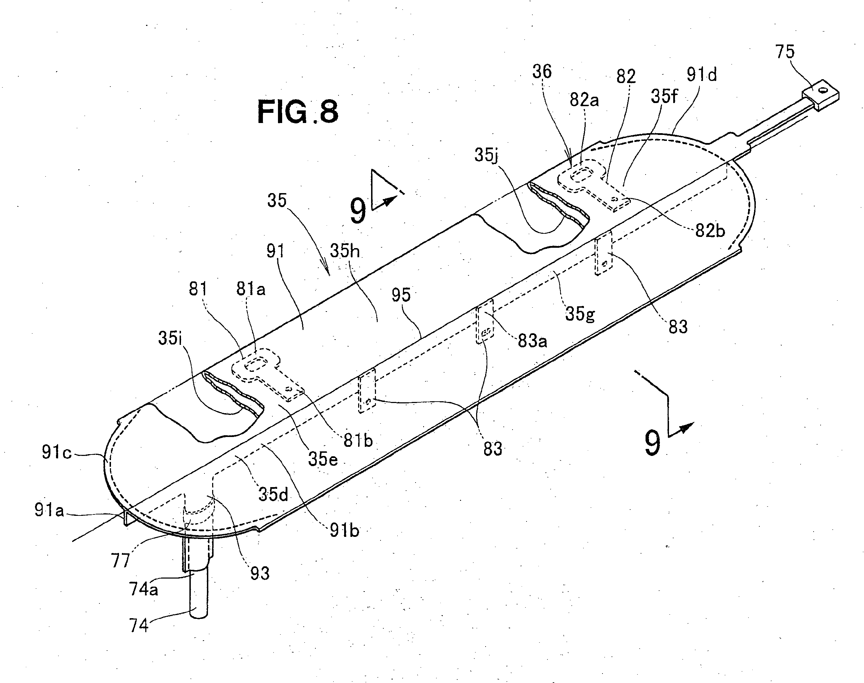

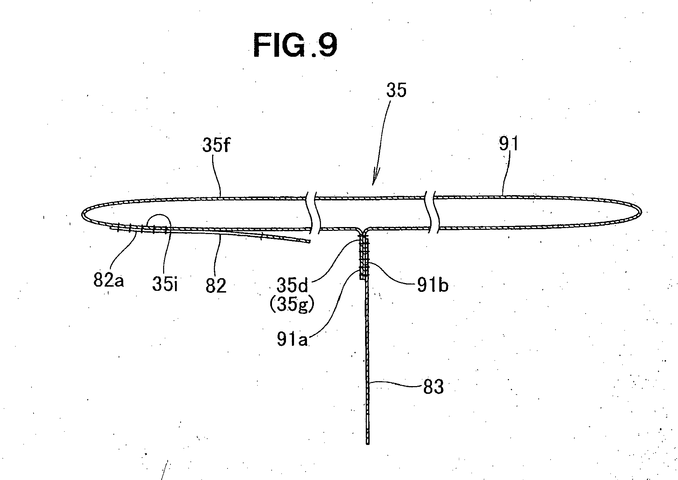

As shown in Figs. 8 and 9, the airbag 35 comprises a single foundation cloth or fabric folded in a cylindrical shape with opposite side edges 91a and 91b of the foundation fabric superposed on each other on the lower side of the foundation fabric. The thus-superposed opposite side edges 91a and 91b are sewn together but also front and rear end edges 91c and 91b are sewn together, so that the single foundation fabric 91 is formed in a bag shape. The airbag 35 also includes a gas introduction section 93 provided near the front end of the superposed side edges 91a and 91b, and a rear connecting section 75 provided on a rear end portion thereof.

The gas introduction section 93 is firmly gripped, by means of a clamp band 77, around a distal end portion 74a of a front connecting section (gas supply pipe) 74 inserted in the gas introduction section 93. In this state, the front connecting section (gas supply pipe) 74 is in communication with the interior of the airbag 35. The gas supply pipe 74 is connected at its proximal end portion to the inflator 37 (Fig. 1).

Further, the connection means 36 is provided on the airbag 35. The connection means 36 includes: a front strap (front connection section) 81 sewn to a front end portion 35e of the airbag 35; a rear strap (rear connection section) 82 sewn to a rear end portion 35f of the airbag 35; and a plurality of middle straps (middle connection sections) 83 sewn to a middle part 35g, in the front-rear direction, of a middle portion 35h of the airbag 35 (the middle part 35g will hereinafter be referred to as "middle lower part").

The front strap 81 is sewn at its one end portion 81a to a front side part 35i of the front end portion 35e of the airbag 35 and extends laterally toward the center in the vehicle width direction. The front strap 81 is a belt-shaped member connecting the front side part 35i of the airbag 35 to the front-side stud member 25 (Fig. 5).

Similarly to the front strap 81, the rear strap 82 is sewn at its one end portion 82a to a rear side part 35j of a rear end portion 35f of the airbag 35 and extends laterally toward the center in the vehicle width direction. The rear strap 82 is a belt-shaped member connecting the rear side part 35j of the airbag 35 to the rear-side stud member 25 (Fig. 5).

Each of the middle straps 83 is sewn at its one end portion 83a to the middle lower part 35g of the airbag 35 and extends downward. Each of the middle straps 83 is a belt-shaped member connecting the middle lower part 35g of the airbag 35 to a middle portion 42d (Fig. 5) of the pillar-side wall 42.

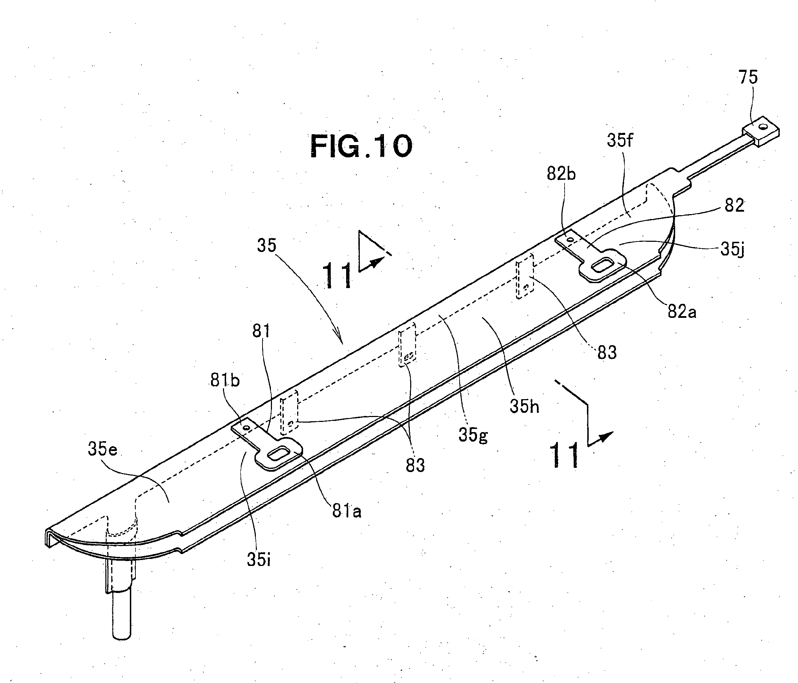

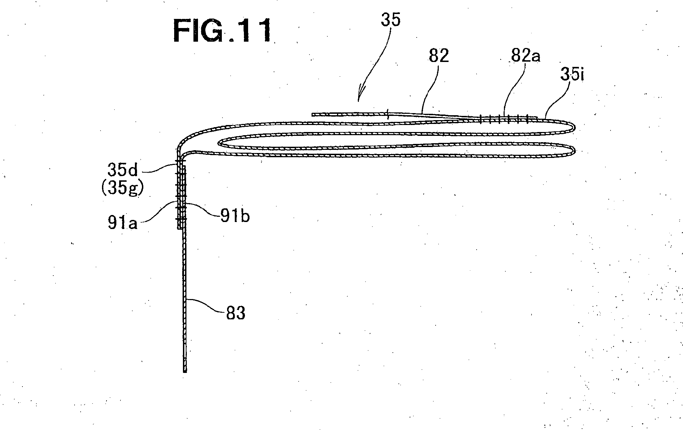

As shown in Figs. 10 and 11, the airbag 35 is folded in half along a straight line 95 (Fig. 8) interconnecting respective middle points, in the vehicle width direction, of the front end portion 35e and rear end portion 35f. With the airbag 35 folded in half like this, the middle lower part 35g of the airbag 35 is located on the outer side of the airbag 35. In this state, the front and rear straps 81 and 82 are located on the upper side of the airbag 35. The middle straps 83 are located on the outer-side middle lower part 35g.

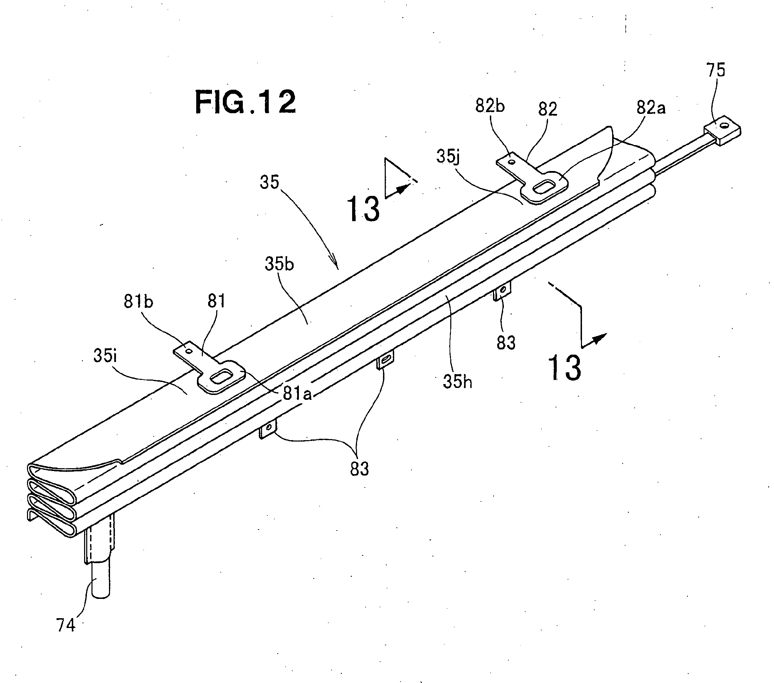

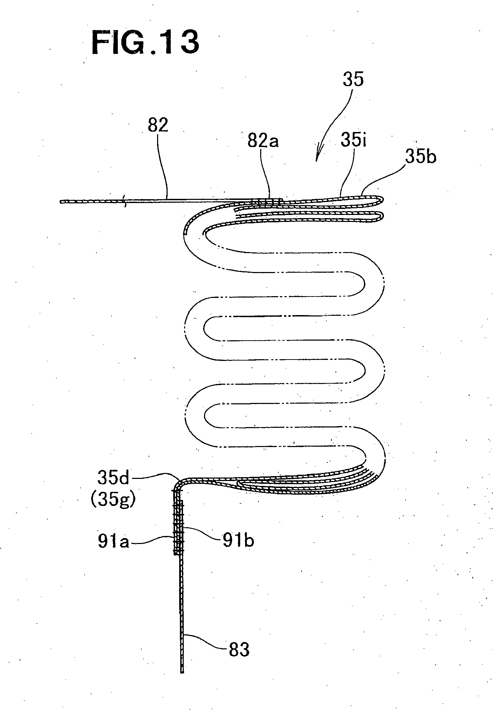

With the airbag 35 folded in an accordion configuration, as shown in Figs. 12 and 13, the outer-side middle lower part 35g is located on the lower side of the airbag 35. In this state, the front and rear straps 81 and 82 are located on the upper portion 35b of the airbag 35. The middle straps 83 are located on the outer-side middle lower part 35g.

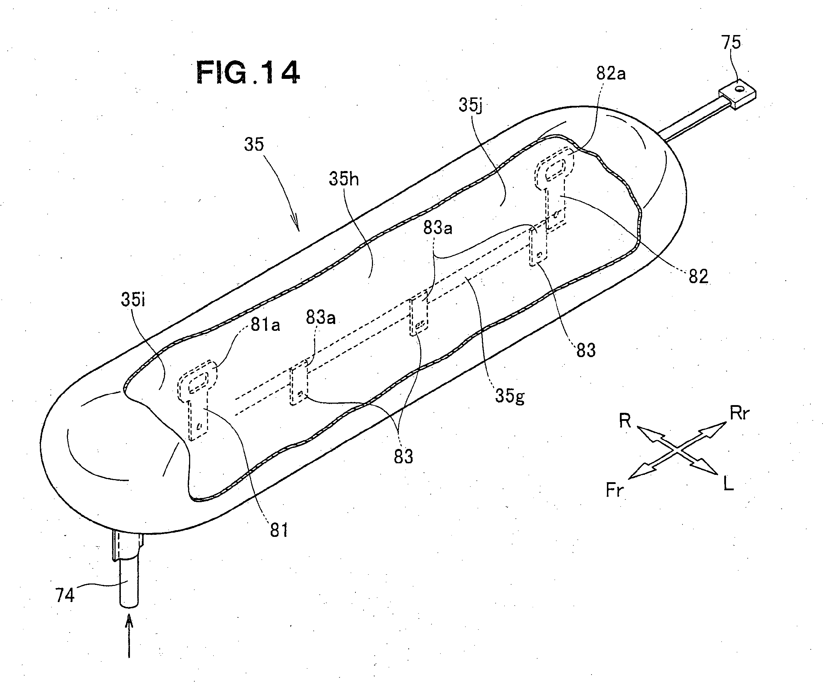

As depicted by an arrow in Fig. 14, gas is supplied from the inflator 37 (Fig. 1) to the airbag 35. Thus, the gas is filled into the airbag 35 so that the airbag 35 deploys into a substantially cylindrical shape.

In this state, the front side part 35i of the airbag 35 is located adjacent to the right front pillar 11 (Fig. 2), and the one end portion 81a of the front strap 81 is sewn to the front side part 35i. The rear side part 35j of the airbag 35 is located adjacent to the right front pillar 11 (Fig. 2), and the one end portion 82a of the rear strap 82 is sewn to the rear side part 35j. Further, the middle lower part 35g of the airbag 35 is located adjacent to the flange section 12 (Fig. 2), and one end portion 83a of each of the middle straps 83 is sewn to the middle lower part 35g.

Further, as shown in Fig. 3, the airbag 35 is disposed over the flange section 12 in an accordion-folded configuration. More specifically, the accordion-folded airbag 35 is disposed over a part 12c of the flange section 12 between the pillar-side wall 42 and the front windshield glass 16. A side portion 35a of the airbag 35 adjacent to the front windshield glass 16, the upper portion 35b of the airbag 35 and a side portion 35c of the airbag 35 adjacent to the pillar-side wall 42 are covered with the garnish 34 (core 41).

A lower portion 35d of the accordion-folded airbag 35 is disposed at a position opposed to the part 12c of the flange section (vehicle body) 12. The upper portion 35b of the accordion-folded airbag 35 is disposed at a position opposed to the lid section 43.

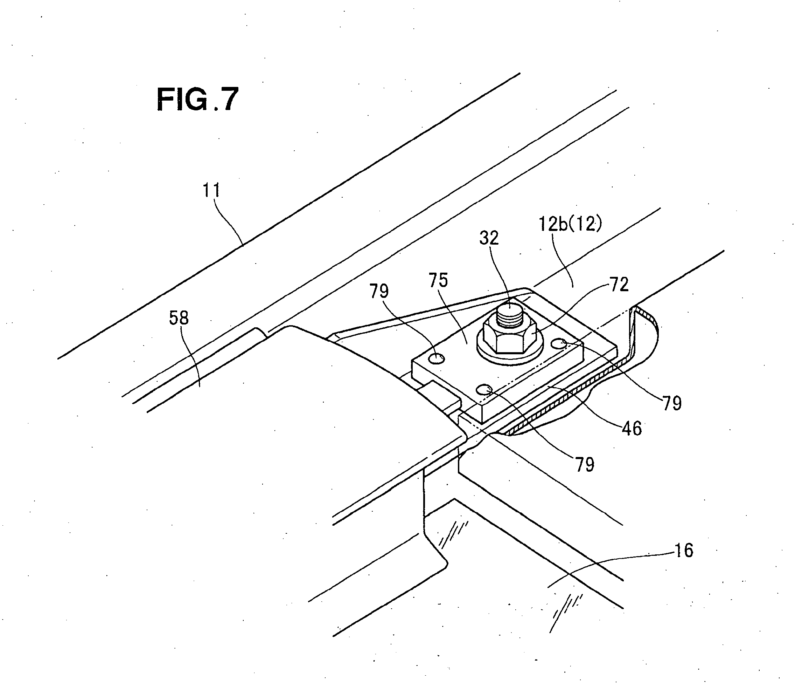

As shown in Figs. 2 and 7, the airbag 35 is connected at its front end portion 35e to the inflator 37 via the front connecting section 74. The front connecting section 74 is mounted on the front part 12a of the flange section 12 via a mounting member 76. Further, the airbag 35 is connected at its rear end portion to the rear mounting bracket 46 via the rear connecting section 75. The rear connecting section 75 is secured to the rear mounting bracket 46 by means of a plurality of rivets 79. The rear connecting section 75 is fastened to the rear part 12b of the flange section 12, together with the rear mounting bracket 46, by means of the rear stud bolt 32 and the rear nut 72. The airbag 35 is connected to the pillar-side wall 42 via the connection means 36.

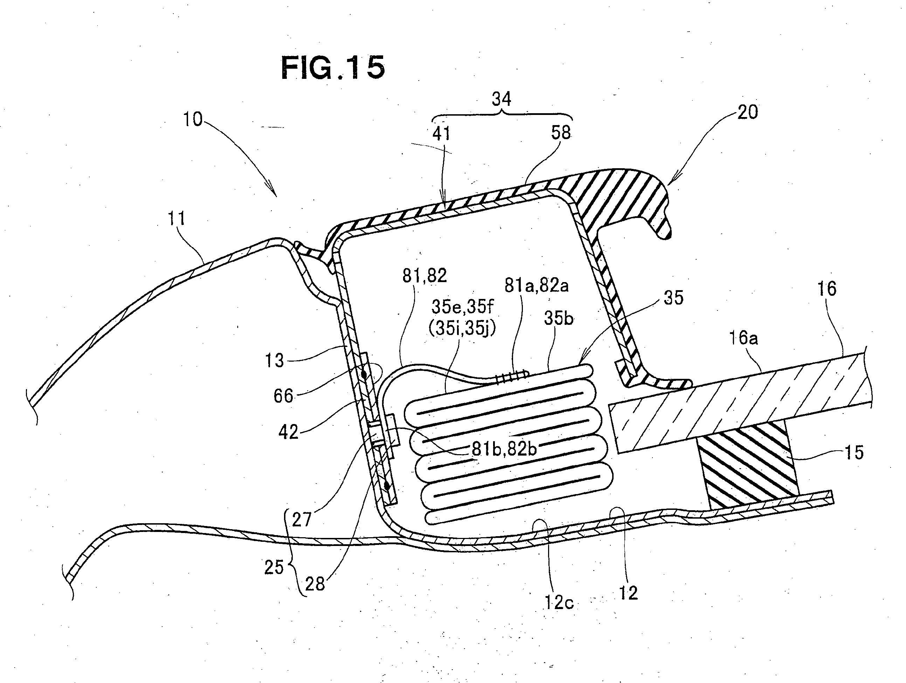

As shown in Fig. 15, the one end portion 81a of the front strap 81 is sewn to the front side part 35i of the airbag 35, and the other end portion 81b of the front strap 81 is engaged by the front-side (i.e., front-side in the vehicle body front-rear direction) stud member 25. Thus, the front side part 35i of the airbag 35 is connected to the front-side stud member 25 (i.e., a front side part of the inner side wall 13) via the front strap 81.

Like the front strap 81, the one end portion 82a of the rear strap 82 is sewn to the rear side part 35j of the airbag 35, and the other end portion 82b of the rear strap 82 is engaged by the rear-side (i.e., rear-side in the vehicle body front-rear direction) stud member 25. Thus, the rear side part 35j of the airbag 35 is connected to the rear-side stud member 25 (i.e., a rear side part of the inner side wall 13) via the rear strap 82.

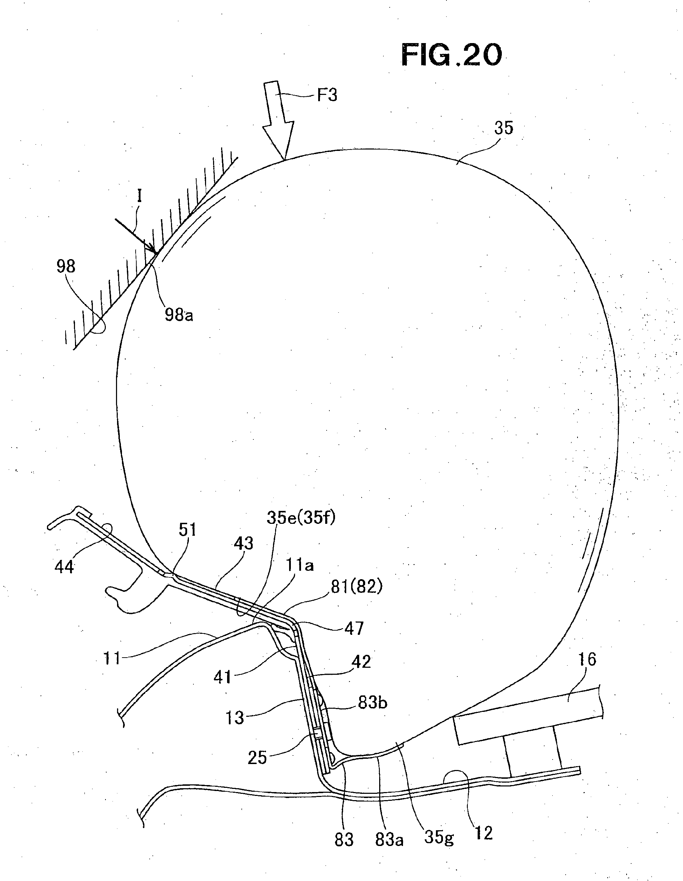

Namely, the front side part 35i and rear side part 35j of the airbag 35 are connected to the stud members 25 via the front and rear straps 81 and 82. Thus, when an obstacle 98 has collided against the airbag 35 following deployment of the airbag 35 (see Fig. 20), the airbag 35 can be prevented from buckling toward the front windshield glass 16.

Further, as shown in Figs. 3 and 6, one end portion 83a of each of the middle straps 83 is sewn to the middle lower part 35g of the airbag 35, and the other end portion 83b is superposed on the reinforcing plate 66. The reinforcing plate 66 is provided on a middle part 42d of the pillar-side wall 42 (i.e., part engaged by the stud members 25). The other end portion 83b of the middle strap 83 is fixedly joined to the reinforcing plate 66 and middle part 42d. Thus, the other end portion 83b of the middle strap 83 is connected to the inner side wall 13 of the right front pillar 11 via the pillar-side wall 42 and the plurality of stud members 25.

The middle strap 83 has an opening 83c formed in the other end portion 83b, and the opening 83c is positioned to overlap the first and second engaging sections 61 and 67 and has a size greater than the first and second engaging sections 61 and 67.

As shown in Fig. 8, the plurality of middle straps 83 are provided on the middle lower part 35g of the airbag 35, of which the middle strap 83 corresponding to the reinforcing plate 66 is fastened at the other end portion 83b to the reinforcing plate 66 and middle part 42d by means of a plurality of rivets 85 as shown in Figs. 3 and 6. The other middle straps 83 are each connected at the other end portion 83b to the stud member 25 (not shown in Fig. 8). The stud members 25 are provided on the inner side wall 13 of the right front pillar 11.

Further, the airbag 35 is connected at the middle lower part 35g to the middle part 42d of the pillar-side wall 42 (middle part of the inner side wall 13) by means of the plurality of middle straps 83. Thus, during deployment (at an initial stage of deployment), the middle lower part 35g can be supported by the plurality of middle straps 83, so that the airbag 35 can be prevented from protruding toward the front windshield glass 16 and thus can be prevented from buckling laterally during the deployment of the airbag 35.

As shown in Figs. 1 and 2, the inflator 37 is mounted on a front part (front part in the vehicle body front-rear direction) of the front windshield glass 16 of the vehicle body by means of a plurality of mounting bolts 87. This inflator 37 is connected to the front end portion 35e of the airbag 35 via the front connecting section 74, and the inflator 37 supplies gas to the airbag 35 once an impact acts on the front vehicle body structure 10.

The airbag 35 is deployed by the gas being supplied from the inflator 37 into the airbag 34 via the front connecting section 74, so that, by the deploying force of the airbag 35, the garnish 34 is pushed and opened upwardly.

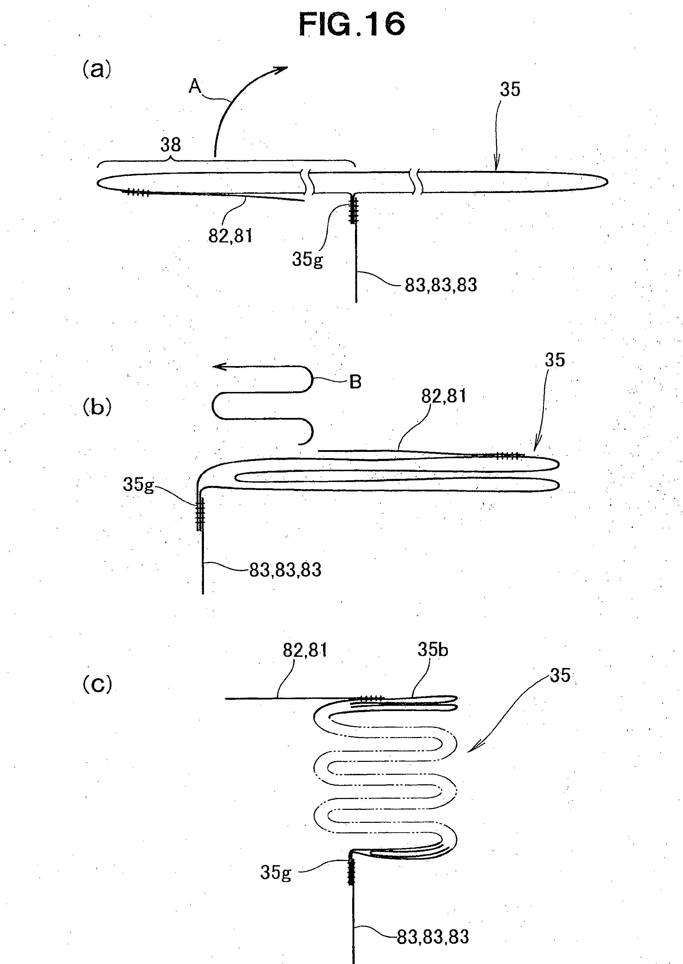

The following describe, with reference to (a) and (c) of Fig. 16, a sequence of operations for folding the airbag 35.

As shown in (a) of Fig. 16, the airbag 35 is first formed in a bag shape, and then one half portion 38 of the airbag 35 is folded over the other half portion as indicated by arrow A,

Then, as shown in (b) of Fig. 16, the airbag 35 is positioned in such a manner that the middle lower part 35g is located on the outer side of the airbag 35 folded in half as above. The plurality of middle straps 83 are provided on the middle lower part 35g located on the outer side of the airbag 35. The front and rear straps 81 and 83 are located on the upper side of the airbag 35. In these conditions, the airbag 35 folded in half is then folded into an accordion configuration as indicated by arrow B.

As shown in Fig. 16(c), the middle lower part 35g is located on the lower side of the accordion-folded airbag 35 with the plurality of middle straps 83 provided on the middle lower part 35a. The front and rear strap 81 and 82 are located on the upper portion 35b of the airbag 35. In these conditions, the airbag 35 is stored in the garnish 34 (Fig. 3).

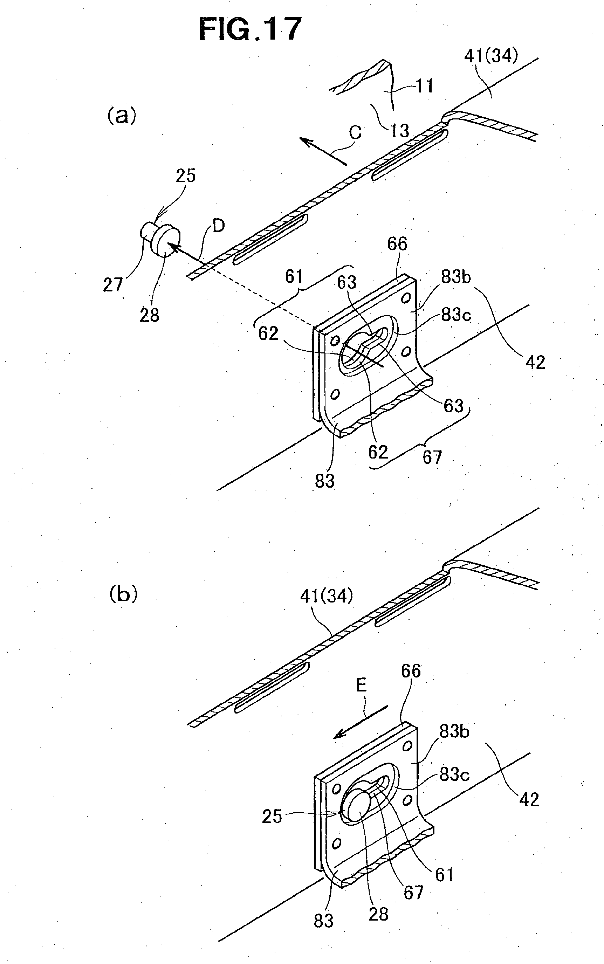

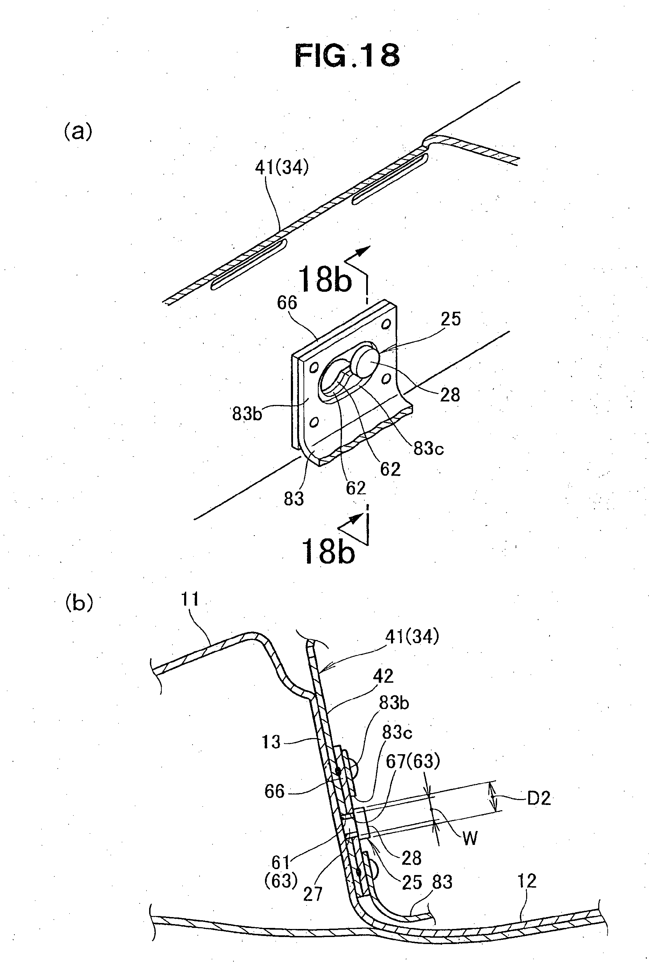

The following describe, with reference to Figs. 17 and 18, a sequence of operations for mounting the garnish 34 to the inner side wall 13 of the right front pillar 11.

As shown in (a) of Fig. 17, the pillar-side wall 42 of the garnish 34 is moved in the vehicle width direction toward the inner side wall 13 of the right front pillar 11 as indicated by arrow C. Thus, the first and second engaging sections 61 and 67 and the opening 83c are fitted over the increased-diameter portion 28 of the stud member 25, provided on the inner side wall 13 of the right front pillar 11, as indicated by arrow D.

As shown in (b) of Fig. 17, the fitting holes 62 of the first and second engaging sections 61 and 67 ((a) of Fig. 17) and the opening 83c are fitted over the increased-diameter portion 28 of the stud member 25 so that the increased-diameter portion 28 of the stud member 25 projects from the fitting holes 62. In these conditions, the garnish 34 (namely, pillar-side wall 42) is moved toward the front of the vehicle body as indicated by arrow E.

As the first and second engaging sections 61 and 67 and the opening 83c are moved toward the front of the vehicle body, the engaging grooves 63 of the first and second engaging sections 61 and 67 are fitted over the support shaft 27 of the stud member 25, as seen in (a) and (b) of Fig. 18. The diameter D1 (Fig. 1) of the fitting hole 62 is substantially equal to as or greater by about 0.1 mm than the outer diameter D2 of the increased diameter portion 28. The groove width W of the engaging groove 63 is smaller than the outer diameter D2 of the increased-diameter portion 28. Thus, with the engaging groove 63 fitted over the support shaft 27, the increased-diameter portion 28 can prevent the engaging groove 63 from slipping out of engagement with the support shaft 27. Thus, the garnish 34 (pillar-side wall 42) can be mounted on the inner side wall 13 of the right front pillar 11 via the support shaft 27 (i.e., stud members 25).

As described above in relation to Figs. 17 and 18, the operations for mounting the garnish 34 to the inner side wall 13 of the right front pillar 11 can be performed with ease. Namely, the garnish 34 can be readily mounted to the front pillar 11 through the simple operations of first fitting the fitting holes 62 of the first and second engaging sections 61 and 67 and then fitting the engaging grooves 63 of the first and second engaging sections 61 and 67 over the support shaft 27.

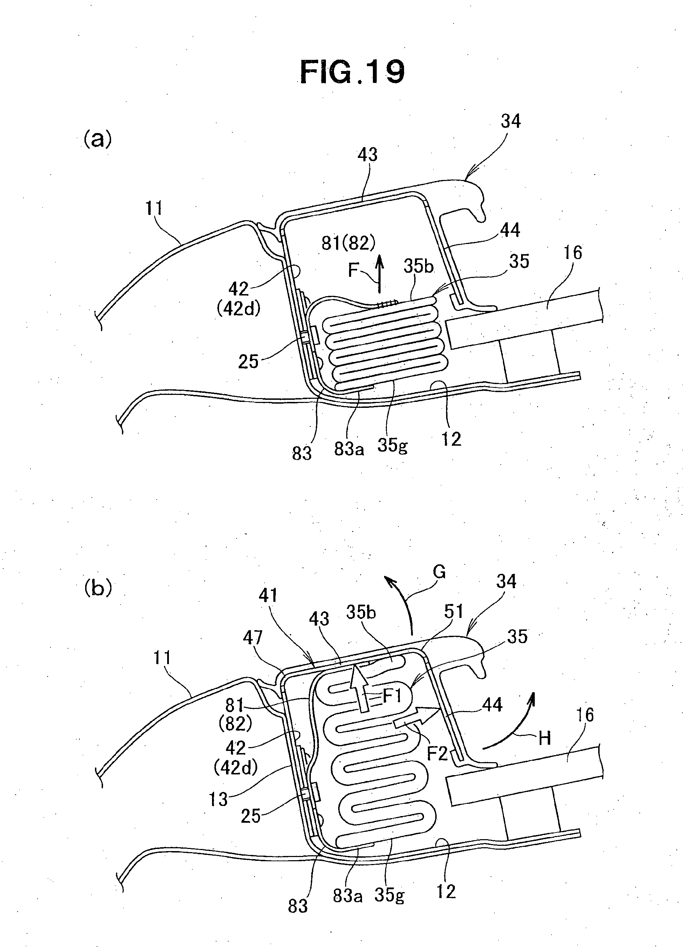

Next, with reference to Figs. 19 to 21, a description will be given about an example manner in which the airbag 35 deploys. In Figs. 19 and 20, the front and rear straps 81 and 82 and the middle strap 83 are shown in order to ease understanding of the deploying movement of the airbag 35.

As shown in (a) of Fig. 19, the accordion-folded airbag 35 is disposed between the pillar-side wall 42 and the front windshield glass 16, and the middle lower part 35g of the airbag 35 is located in a lower region of the airbag 35. The middle lower part 35g of the airbag 35 is connected, via the middle straps 83, to the middle portion 42d of the pillar-side wall 42 (right front pillar 11). In these conditions, the airbag 35 deploys as indicated by arrow F by gas being supplied from the inflator 37 (Fig. 1) to the airbag 35.

As shown in (b) of Fig. 19, the upper portion 35b of the airbag 35 abuts against the lid section 43 of the garnish 34 as the airbag 35 deploys within the garnish 34. By the upper portion 35b of the airbag 35 abutting against the lid section 43 like this, pressing force (i.e., deploying force) F1 of the airbag 35 acts on the lid section 43 as indicated by an arrow.

The deploying force F1 of the airbag 35 acting on the lid section 43 opens the lid section 43 upwardly about the outer corner portion 47 as indicated by arrow G. Further, as the deployment of the airbag 35 progresses, deploying force F2 of the airbag 35 acts on the window-glass-side wall 44 as indicated by an arrow.

The deploying force F2 of the airbag 35 acting on the window-glass-side wall 44 opens the window-glass-side wall 44 about the inner corner portion 51 as indicated by arrow H. In this manner, the deploying force of the airbag 35 can upwardly press and open the garnish 34.

The metal core 41 (pillar-side wall 42) is mounted on the inner side wall 13 of the right front pillar 11 by means of the stud members 25. Thus, as the airbag 35 opens by the deploying force F1 of the airbag 35 and the window-glass-side wall 44 opens by the deploying force F2 of the airbag 35, the garnish 34 can be kept retained on the front pillar 11.

Further, the middle lower part 35g of the airbag 35 is connected, via the middle straps 83, to the middle portion 42d. Thus, the middle lower part 35g of the airbag 35 can be supported by the middle straps 83 during deployment (at the initial deployment stage) of the airbag 35. By the middle lower part 35g of the airbag 35 being supported by the middle straps 83 like this, the middle lower part 35g is prevented by the middle straps 83 from moving toward the front windshield glass 16. Thus, the airbag 35 can be reliably prevented from undesirably protruding and laterally buckling toward the front windshield glass 16. Thus, the deploying force F1 of the airbag 35 can be caused to efficiently act upwardly, so that the garnish 34 can be appropriately opened upwardly by the deploying force Fl.

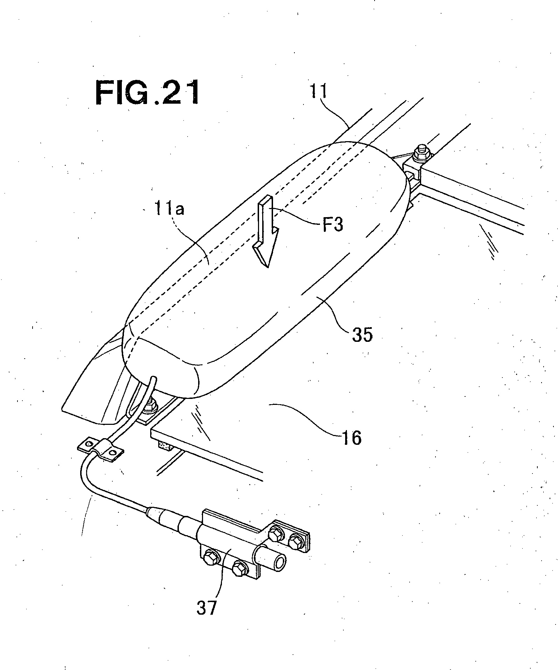

As shown in Figs. 20 and 21, the airbag 35 deploys between the front pillar 11 and the front windshield glass 16 while upwardly pressing and opening the garnish 34 by its deploying force.

With the middle lower part 35g of the airbag 35 connected to the pillar-side wall 42 via the middle straps 83, it is possible to prevent the airbag 35 from laterally buckling during the deployment. Namely, the deploying direction of the airbag 35 can be controlled by the middle straps 83. By the deploying direction of the airbag 35 being controlled by the middle straps 83 and by the airbag 35 being prevented from laterally buckling during the deployment in the aforementioned manner, the airbag 35 can appropriately deploy along an upper portion 11a of the front pillar 11.

After the airbag 35 has deployed along the upper portion 11a of the front pillar 11, an upper part (to-be-protected part) of a bar-shaped obstacle 98 may abut against (contact) the airbag 35, as indicated by arrow I, to cause the airbag 35 to laterally buckle before an upper end portion (protection-requiring portion) of the external obstacle 98.

Therefore, in the embodiment, not only the middle lower part 35g is connected to the pillar-side-wall 42 via the middle straps 83, but also the airbag 35 is connected at the front end portion 35e and rear end portion 35f to the stud members 25 via the front and rear strap 81 and 82. Thus, when the upper part (to-be-protected part) 98a of the obstacle 98 has abutted against (contacted) the airbag 35 as indicated by arrow I, lateral buckling of the airbag 35 can be prevented by the middle straps 83 and front and rear strap 81 and 82. In this way, the embodiment can reliably bear an impact load F3 of the upper end portion (protection-requiring portion) of the external obstacle 98 and thereby appropriately lessen an impact acting on the upper end portion (protection-requiring portion) of the external obstacle 98.

The airbag device of the present invention is not limited to the above-described embodiment and may be modified as necessary. For example, whereas the embodiment has been described as employing a plurality of (three) middle straps 83 as a middle connection section, the number of the middle straps 83 may be changed as appropriate. For example, only a midmost one of the middle straps 83 may be used.

Further, whereas the embodiment has been described above in relation to the case where the front and rear strap 81 and 82 (one end portions 81a and 82a) are located on the upper portion 35b of the airbag 35 folded in the accordion configuration, the present invention is not so limited. For example, in the airbag 35 folded in the accordion configuration, the front and rear strap 81 and 82 (one end portions 81a and 82a) may be located inside the accordion-folded airbag 35 with the other end portions 81b and 82b located outside the accordion-folded airbag 35.

Further, whereas the embodiment has been described above in relation to the case where a plurality of outer slits 48 are formed in the outer corner portion 47 and a plurality of inner slits 52 are formed in the inner corner section 51, the present invention is not so limited. For example, no such slits need be formed in the outer corner portion 47 and in the inner corner section 51. Furthermore, whereas the embodiment has been described above in relation to the case where a plurality of outer slits 48 and a plurality of inner slits 52 are provided, the present invention is not so limited, and only one such outer slit 48 and inner slit 52 may be provided.

Furthermore, whereas the embodiment of the airbag device 20 has been described as provided on the right front pillar 11, the present invention is not so limited, and the airbag device 20 may be provided on the left front pillar 11.

The shapes and constructions of the airbag device 20, right front pillar 11, flange section 20, front windshield glass 16, stud member 25, garnish 34, airbag 35, inflator 37, core 41, pillar-side wall 42, lid section 43, window-glass-side wall 44, front mounting bracket 45, rear mounting bracket 46, outer corner portion 47, outer slit 48, decorative resin section 58, first engaging section 61, fitting hole 62, engaging groove 63, front strap 81, rear strap 82, middle strap 83, etc. are not limited to the ones shown and mentioned above and may be modified as necessary.

### Industrial Applicability

The basic principles of the present invention are well suited for application to automotive vehicles provided with an airbag device which has an airbag stored between a front pillar and a front windshield glass, and in which the airbag is covered with a garnish.

### Legend

20 ... airbag device, 11 ... right front pillar (front pillar), 12 ... flange section (vehicle body), 12a ... front part (part of a vehicle body front end portion between front pillar and front windshield glass), 12b ... rear part (part of vehicle body rear end portion between front pillar and front windshield glass), 16 ...front windshield glass, 25 ... stud member, 27 ... support shaft, 28 ... increased-diameter portion, 31 ... front stud bolt, 32 ... rear stud bolt, 34 ... garnish, 35 ... airbag, 35d ... lower portion of airbag, 35e ... front end portion of airbag, 35f ... rear end portion of airbag, 35g ... middle lower part of airbag, 35h ... middle portion of airbag, 35i ... front side part of airbag, 35j ... rear side part of airbag, 37 ... inflator, 41 ... core, 41a ... surface of core, 42 ... pillar-side wall, 42a ... front end portion of pillar-side wall (front end portion of core), 42b ... rear end portion of pillar-side wall (rear end portion of core), 42c ... inner wall surface of pillar-side wall, 42d ... middle portion of pillar-side wall, 43 ... lid section, 44 ... window-glass-side wall, 45 ... front mounting bracket, . 46 ... rear mounting bracket, 47 ... outer corner portion (corner portion), 48 ... outer slit (slit), 58 ... decorative resin section, 61 ... first engaging section (engaging section), 62 ... fitting hole, 63 ... engaging groove, 71 ... front nut, 72 ... rear nut, 81 ... front strap (front connection section), 82 ... rear strap (rear connection section), 83 ... middle strap (middle connection section), 83b ...other end portion of middle strap (mounting end portion), 95 ... straight line, 98 ... external obstacle, D2 ... outer diameter of increased-diameter portion, H1, H2, H3 distances between outer slits, W ... groove width

## Claims

1. A vehicle comprising a front pillar (11), a front windshield glass (16) and an airbag device (20), said airbag device (20) comprising:
an airbag (35) stored folded between the front pillar (11) and the front windshield glass (16);
an inflator (37) for supplying gas to the airbag (35) to deploy the airbag (35);
a garnish (34) covering the airbag (35) and openable by a deploying force of the airbag (35);
a front connection section (74) connecting a front side part (35), adjacent to the front pillar (11), of a front end portion (35e) of the airbag (35) to the front pillar (11);
a rear connection section (75) connecting a rear side part (35), adjacent to the front pillar (11), of a rear end portion (35f) of the airbag (35) to the front pillar (11); and
a middle connection section (83) connecting a middle lower part (35g) of the airbag (35) to the front pillar (11),
wherein the front connection section (74) and the rear connection section (75) prevent the airbag (35) from buckling toward the front windshield glass (16) when an obstacle (98) has collided against the airbag (35) following deployment of the airbag (35), and the middle connection section (83) prevents the airbag (35) from protruding toward the front windshield glass (16) at an initial stage of deployment of the airbag (35),
**characterized in that** the airbag (35) is folded in half along a straight line (95) interconnecting respective middle points, in a vehicle width direction, of the front end portion (35e) and the rear end portion (35f) of the airbag (35) in such a manner that the middle lower part (35g) is located on an outer side of the airbag (35), and the airbag (35) is also folded in an accordion configuration in such a manner that the middle lower part (35g) of the airbag (35) folded in half is located on a lower side of the airbag (35).

## Patentansprüche

1. Fahrzeug umfassend eine vordere Säule (11), eine vordere Windschutzscheibe (16) und eine Airbag-Einrichtung (20), wobei die Airbag-Einrichtung (20) umfasst:
einen Airbag (35), welcher zusammengefaltet zwischen der vorderen Säule (11) und der vorderen Windschutzscheibe (16) untergebracht ist;
einen Gasgenerator (37), um dem Airbag (35) Gas zuzuführen, um den Airbag (35) zu entfalten;
ein Dekorteil (34), welches den Airbag (35) abdeckt und durch eine Entfaltungskraft von dem Airbag (35) geöffnet werden kann;
einen vorderen Verbindungsabschnitt (74), welcher einen vorderen Seitenteil (35) benachbart der vorderen Säule (11) von einem vorderen Endabschnitt (35e) von dem Airbag (35) mit der vorderen Säule (11) verbindet;
einen hinteren Verbindungsabschnitt (75), welcher einen hinteren Seitenteil (35) benachbart der vorderen Säule (11) von einem hinteren Endabschnitt (35f) von dem Airbag (35) mit der vorderen Säule (11) verbindet; und
einen mittleren Verbindungsabschnitt (83), welcher einen mittleren unteren Teil (35g) von dem Airbag (35) mit der vorderen Säule (11) verbindet,
wobei der vordere Verbindungsabschnitt (74) und der hintere Verbindungsabschnitt (75) verhindern, dass der Airbag (35) zu der vorderen Windschutzscheibe (16) hin nachgibt, wenn ein Hindernis (98) nach einer Entfaltung des Airbags (35) gegen den Airbag (35) geprallt ist, und der mittlere Verbindungsabschnitt (83) verhindert, dass der Airbag (35) in einem Anfangsstadium der Entfaltung des Airbags (35) zu der vorderen Windschutzscheibe (16) hin vorsteht,
**dadurch gekennzeichnet, dass** der Airbag (35) entlang einer geraden Linie (95), welche jeweilige Mittelpunkte, in einer Fahrzeugbreitenrichtung, von dem vorderen Endabschnitt (35e) und dem hinteren Endabschnitt (35f) von dem Airbag (35) miteinander verbindet, in einer solchen Weise in der Mitte gefaltet ist, dass der mittlere untere Teil (35g) auf einer äußerten Seite von dem Airbag (35) angeordnet ist, und dass der Airbag (35) auch in einer Ziehharmonika-Konfiguration in einer solchen Weise gefaltet ist, dass der mittlere untere Teil (35g) von dem in der Mitte gefalteten Airbag (35) auf einer unteren Seite von dem Airbag (35) angeordnet ist.

## Revendications

1. Véhicule comprenant un montant avant (11), une vitre de pare-brise avant (16) et un dispositif de coussin gonflable (20), ledit dispositif de coussin gonflable (20) comprenant :
un coussin gonflable (35) stocké plié entre le montant avant (11) et la vitre de pare-brise avant (16) ;
un gonfleur (37) destiné à alimenter, en gaz le coussin gonflable (35) afin de déployer le coussin gonflable (35) ;
une garniture (34) couvrant le coussin gonflable (35) et pouvant être ouverte par une force de déploiement du coussin gonflable (35) ;
une section de connexion avant (74) connectant une partie latérale avant (35), adjacente au montant avant (11), d'une portion d'extrémité avant (35e) du coussin gonflable (35) au montant avant (11) ;
une section de raccordement arrière (75) raccordant une partie latérale arrière (35), adjacente au montant avant (11) d'une portion d'extrémité arrière (35f) du coussin gonflable (35), au montant avant (11) ; et
une section de raccordement milieu (83) raccordant une partie inférieure milieu (35g) du coussin gonflable (35) au montant avant (11),
dans lequel la section de raccordement avant (74) et la section de raccordement arrière (75) empêchent le coussin gonflable (35) de se gondoler vers la vitre de pare-brise avant (16) lorsqu'un obstacle (98) est entré en collision avec le coussin gonflable (35) à la suite du déploiement du coussin gonflable (35), et la section de raccordement milieu (83) empêche le coussin gonflable (35) de faire saillie vers la vitre de pare-brise avant (16) à une étape initiale du déploiement du coussin gonflable (35),
**caractérisé en ce que** le coussin gonflable (35) est plié en deux le long d'une ligne droite (95) reliant entre eux des points milieu respectifs, dans une direction de la largeur du véhicule, de la portion d'extrémité avant (35e) et la portion d'extrémité arrière (35f) du coussin gonflable (35) de telle sorte que la partie inférieure milieu (35g) est située sur un côté externe du coussin gonflable (35), et le coussin gonflable (35) est également plié dans une configuration en accordéon de telle sorte que la partie inférieure milieu (35g) du coussin gonflable (35) plié en deux soit située sur un côté inférieur du coussin gonflable (35).
